# EUROPÄISCHE PATENTSCHRIFT

(11) **EP 4 003 899 B1**
(45) Veröffentlichungstag und Bekanntmachung des Hinweises auf die Patenterteilung: **30.04.2025**
(21) Anmeldenummer: 20747368.7
(22) Anmeldetag: 24.07.2020
(51) Int. Cl.: B67D 1/00, B67D 1/08

(54) **VERFAHREN ZUR HERSTELLUNG EINES KARTUSCHENSYSTEMS**
METHOD FOR PRODUCING A CARTRIDGE SYSTEM
PROCÉDÉ DE PRODUCTION D'UN SYSTÈME DE CARTOUCHE

(30) Priorität: 26.07.2019 DE 102019211189; 23.08.2019 DE 102019212708
(43) Veröffentlichungstag der Anmeldung: 01.06.2022
(73) Patentinhaber: Freezio AG, 8580 Amriswil (CH)
(72) Erfinder: EMPL, Günter, 51429 Bergisch Gladbach (DE); KRÜGER, Marc, 51467 Bergisch Gladbach (DE)
(74) Vertreter: Kutzenberger Wolff & Partner
(86) Internationale Anmeldenummer: PCT/EP2020/070927
(87) Internationale Veröffentlichungsnummer: WO 2021/018760

(56) Entgegenhaltungen:
- EP-A1- 2 017 221
- EP-A1- 3 225 684
- WO-A1-2017/121796
- WO-A1-2019/101997

## Beschreibung

### Stand der Technik

Die vorliegende Erfindung betrifft ein Verfahren zur Herstellung eines Kartuschensystems zur Herstellung eines Getränks, wobei das Kartuschensystem in eine Getränkezubereitungsmaschine einsetzbar ist, eine Kartusche, die ein mit einer Getränkesubstanz gefülltes Reservoir umfasst, und eine mit der Kartusche verbundene Kartuschenaufnahme aufweist, wobei die Kartuschenaufnahme eine mit dem Reservoir in Fluidverbindung bringbare Mischkammer und eine in die Mischkammer mündende Fluidzuführung aufweist, wobei die Kartusche zumindest teilweise aus Aluminium gefertigt ist.

Ein solches Verfahren ist z.B. aus der EP 2 017 221 A bekannt.

Kartuschensysteme sind aus dem Stand der Technik beispielsweise aus den Druckschriften EP 2 017 221 A1, WO 2017 / 121 802 A1, WO 2017 / 121 801 A1, WO 2017 / 121 801 A1, WO 2017 / 121 799 A1, WO 2017 / 121 798 A1, WO 2017 / 121 797 A1, WO 2017 / 121 796 A1 und WO 2019 / 002 293 A1 bekannt und werden zur Herstellung von Getränken aus vorportionierten Kartuschen verwendet. Die Herstellung von Getränken mit solchen Systemen ist für den Anwender äußerst komfortabel, da er lediglich eine Kartusche einsetzen und einen Startknopf drücken muss. Die Getränkezubereitungsmaschine übernimmt dann vollautomatisiert die Erzeugung desselben, das heißt insbesondere, dass die Getränkesubstanz mit einer vorbestimmten Menge an Flüssigkeit, insbesondere kaltem und karbonisiertem Wasser vermischt wird und in ein Trinkgefäß geleitet wird. Auf diese Weise lassen sich insbesondere Mixgetränke für den Anwender deutlich einfacher, schneller und mit weniger Aufwand herstellen. Der Anwender kann dabei aus einer Vielzahl von verschiedenen Kartuschen auswählen, so dass er je nach Belieben unterschiedliche Getränke herstellen kann.

Eine große Herausforderung bei solchen Systemen besteht darin, die Bezugsdauer, als diejenige Zeit, ab dem Starten des Getränkeherstellungsprozesses durch den Benutzer für die Herstellung des fertigen Getränks benötigt wird, zu minimieren, um den Nutzerkomfort zu erhöhen. Ferner besteht eine weitere Herausforderung darin, ausreichend Getränkesubstanz sowie ausreichend Kohlensäure für ein geschmacklich ansprechendes Getränk, insbesondere während dieser zu minimierenden Bezugsdauer, bereitzustellen.

Der Gegenstand der vorliegenden Erfindung ist ein Verfahren zur Herstellung eines Kartuschensystems, wobei in einem ersten Verfahrensschritt ein Aluminiumblech bereitgestellt wird, wobei in einem zweiten Verfahrensschritt durch Stanzen und Tiefziehen oder Fließpressen zumindest teilweise der Hauptkörper aus dem Blech erzeugt wird, wobei in einem dritten Verfahrensschritt ein Dichtelement am Hauptkörper befestigt wird und wobei in einem vierten Verfahrensschritt der Hauptkörper mit der Kartuschenaufnahme verbunden wird. Das erfindungsgemäße Verfahren ermöglicht die schnelle und kostengünstige Herstellung einer vergleichsweise stabilen Kartusche, welche geringere Bezugszeiten und höhere Kohlensäureanteile ermöglicht.

In einem vor dem vierten Verfahrensschritt durchgeführten Zwischenschritt könnte die Kartuschenaufnahme durch Spritzgießen von Kunststoff hergestellt werden. In vorteilhafter Weise wird somit derjenige Teil des Kartuschensystems, der keine hohe Druckbeaufschlagung durch Einleiten von Druckluft erfährt, durch ein kostengünstiges Herstellungsverfahren in Kunststoff gefertigt, wodurch die Gesamtfertigungskosten geringgehalten werden können.

Gemäß einer weiteren bevorzugten Ausführungsform der vorliegenden Erfindung ist vorgesehen, dass in einem vor oder nach dem vierten Verfahrensschritt durchgeführten weiteren Zwischenschritt ein Aufstechdorn hergestellt und in eine Dornführung der Kartuschenaufnahme eingebracht wird.

Gemäß einer weiteren bevorzugten Ausführungsform der vorliegenden Erfindung ist vorgesehen, dass in einem vor dem dritten Verfahrensschritt durchgeführten weiteren Zwischenschritt das Dichtelement in Form des Dichtkörpers aus einem Aluminiumblech und/oder aus einer Dichtfolie, vorzugsweise einer Kunststofffolie, einer Aluminiumfolie oder einer Mehrschichtfolie aus Kunststoff und/oder Aluminium, ausgestanzt und/oder ausgeschnitten wird. Bei Verwendung eines Aluminiumbleches wird insbesondere das Blech im zweiten Verfahrensschritt dann derart tiefgezogen, dass der aus dem Aluminiumblech geformte Dichtkörper des Dichtelements in seinem typischen Wandungsbereich vorzugsweise eine Wandstärke zwischen 0,09 und 0,5 Millimeter, bevorzugt zwischen 0,1 und 0,3 Millimeter, besonders bevorzugt zwischen 0,15 und 0,25 Millimeter und ganz besonders bevorzugt von im Wesentlichen 0,2 Millimeter aufweist, insbesondere mit einer Fehlertoleranz von maximal 15%.

Gemäß einer weiteren bevorzugten Ausführungsform der vorliegenden Erfindung ist vorgesehen, dass im weiteren Zwischenschritt im weiteren Zwischenschritt der Teilbereich im Dichtkörper zur Ausbildung der Vorstanzung teilweise gestanzt wird. Durch das Vorstanzen wird somit die spätere Durchgangsöffnung definiert, welche im Ausgangszustand durch den noch an den übrigen Dichtkörper angebundenen Teilbereich verschlossen ist und erst durch den Aufstechdorn unmittelbar vor oder während der Getränkeherstellung geöffnet wird.

Gemäß einer weiteren bevorzugten Ausführungsform der vorliegenden Erfindung ist vorgesehen, dass in einem vor oder während des dritten Verfahrensschrittes durchgeführten weiteren Zwischenschritt das Dichtelement um einen Rand der Kartuschenwandung geformt wird. Dieses Umformen kann sowohl bei der Variante, bei welcher das Dichtelement den aus einem starren oder halbstarren Aluminium gefertigten Dichtkörper umfasst, durchgeführt werden, als auch bei der Variante, bei welcher das Dichtelement ausschließlich aus der Dichtfolie besteht.

Gemäß einer weiteren bevorzugten Ausführungsform der vorliegenden Erfindung ist vorgesehen, dass während des dritten Verfahrensschrittes das Dichtelement an den Rand der Kartuschenwandung gecrimpt, geklebt, gesiegelt und/oder geschweißt wird. Bei derjenigen Variante, bei welcher das Dichtelement den aus einem starren oder halbstarren Aluminium gefertigten Dichtkörper umfasst, wird der Dichtkörper insbesondere an die Kartuschenwandung gecrimpt. Bei derjenigen Variante, bei welcher das Dichtelement ausschließlich aus der Dichtfolie besteht, wird die Dichtfolie insbesondere an die Kartuschenwandung geklebt, gesiegelt und/oder geschweißt.

Gemäß einer weiteren bevorzugten Ausführungsform der vorliegenden Erfindung ist vorgesehen, dass während des vierten Verfahrensschrittes ein Befestigungsbereich des Dichtelements zwischen dem Rand der Kartuschenwandung und einem Teil der Kartuschenaufnahme angeordnet und insbesondere eingeklemmt, eingeschweißt und/oder eingeklebt wird. Vorzugsweise wird der Befestigungsbereich somit zusätzlich durch das Verbindungs- und Gegenverbindungsmittel befestigt.

Gemäß einer weiteren bevorzugten Ausführungsform der vorliegenden Erfindung ist vorgesehen, dass in einem weiteren Zwischenschritt eine Durchgangsöffnung in dem Dichtelement erzeugt, insbesondere in das Dichtelement gebohrt wird und wobei die Durchgangsöffnung in einem späteren weiteren Zwischenschritt mit einer Dichtfolie verschlossen wird, wobei die Dichtfolie vorzugsweise auf das Dichtelement geklebt, geschweißt und/oder gesiegelt wird. Diese Ausführung betrifft diejenige Variante, bei welcher das Dichtelement den aus einem starren oder halbstarren Aluminium gefertigten Dichtkörper umfasst. Dieser Dichtkörper wird mit der Durchgangsöffnung versehen, welche im späteren Zwischenschritt durch die perforierbare Dichtfolie verschlossen wird. Diese Dichtfolie kann sowohl auf der Seite der Mischkammer am Dichtkörper angeordnet und befestigt oder auf der Seite des Reservoirs am Dichtkörper angeordnet und befestigt sein.

Gemäß einer weiteren bevorzugten Ausführungsform der vorliegenden Erfindung ist vorgesehen, dass während oder nach dem zweiten Verfahrensschritt durchgeführten weiteren Zwischenschritt ein Verbindungsmittel, insbesondere eine Rastsicke, ein Rastwulst oder ein Hinterschnitt, in der Kartuschenwandung insbesondere durch Umformen erzeugt wird. Ferner wird vor dem vierten Verfahrensschritt und insbesondere während des Spritzgießens des Kartuschenaufnahme sodann vorzugsweise ein Gegenverbindungsmittel, insbesondere eine Rastsicke, ein Rastwulst oder ein Hinterschnitt, an der Kartuschenaufnahme erzeugt. Auf diese Weise wird sodann optional ermöglicht, dass während des vierten Verfahrensschrittes ein Befestigungsbereich des Dichtelements zwischen dem Verbindungsmittel und dem Gegenverbindungsmittel angeordnet und insbesondere eingeklemmt, eingeschweißt und/oder eingeklebt ist wird.

Der napfförmige Hauptkörper ist im zweiten Verfahrensschritt vorzugsweise vollständig durch Tiefziehen oder Fließpressen hergestellt. Vorzugsweise ist der Hauptkörper napfförmig mit einer zylinderförmigen Kartuschenwandung, die auf einer Seite durch einen Kartuschenboden verschlossen ist, ausgebildet, wobei die Kartuschenwandung und der Kartuschenboden insbesondere einstückig ausgebildet sind. Denkbar ist, dass die Kartuschenwandung und der Kartuschenboden aus einem Stück und insbesondere beide aus Aluminium bestehen, indem der Hauptkörper aus einem Aluminiumblech tiefgezogen wird. Alternativ zum Tiefziehen oder Fließpressen kann der Hauptkörper aber auch nur teilweise durch Tiefziehen oder Fließpressen hergestellt sein, indem ein Aluminiumblech zu einem zylinderförmigen Rohr gebogen wird und anschließend die Stoßseiten des zu dem Rohr gebogenen Aluminiumblechs miteinander verklebt, verschweißt und/oder verpresst werden, sodass ein Hauptkörper mit Längsnaht entsteht, wobei dann zusätzlich der Kartuschenboden als separater Deckelkörper durch Tiefziehen oder Fließpressen eines weiteren Aluminiumblechs ausgeformt wird. Dieser als separater Deckelkörper ausgebildete Kartuschenboden kann anschließend über dasjenige Ende der zum Rohr gebogenen Kartuschenwandung gestülpt werden, welches der Kartuschenaufnahme abgewandt ist und dort mit der Kartuschenwandung umlaufend verklebt, verschweißt und/oder verpresst werden. Insbesondere wird der Deckelkörper zur Bildung des Kartuschenbodens auf die rohrförmige Kartuschenwandung aufgecrimpt.

Es wird ein Kartuschensystem zur Herstellung eines Getränks in einer Getränkezubereitungsmaschine offenbart, bei welchem die Herstellung eines geschmacklich ansprechenden Getränks bei minimaler Bezugsdauer erzielt wird.

Das Kartuschensystem hat den Vorteil, dass die Kartusche nicht aus Kunststoff, sondern aus Aluminium gefertigt ist. Die Kartusche ist daher wesentlich stabiler ausgebildet und kann insbesondere einen höheren Innendruck vertragen. Die insbesondere flüssige Getränkesubstanz kann somit unter einem höheren Druck im Reservoir eingeschlossen sein, ohne dass es zu einer Beschädigung oder Verformung der Kartusche kommt. Es ist somit möglich, flüssige Getränkesubstanzen mit einem höheren Kohlensäuregehalt im Reservoir vorzuhalten, ohne dass die Gefahr besteht, dass das Reservoir bei Erschütterungen beispielsweise während des Transports oder der Lagerung des Kartuschensystems aufgrund der Kohlensäure platzt. Der höhere Kohlensäuregehalt wirkt sich wiederum positiv sowohl auf den Geschmack des herzustellenden Getränks als auch auf das Mindesthaltbarkeitsdatum der Kartusche aus. Ein weiterer Vorteil des eKartuschensystems besteht darin, dass das Reservoir während des Getränkeherstellungsprozesses mit einem höheren Druck ausgeleert werden kann. Hierdurch kann die Bezugszeit signifikant verringert werden, ohne dass hierbei eine Geschmacksbeeinträchtigung beim herzustellenden Getränk droht. Um die gewünschte Stabilität zu erzielen, weist die Kartusche einen aus Aluminium gefertigten Hauptkörper auf, der in seinem typischen Wandungsbereich vorzugsweise eine Wandstärke zwischen 0,01 und 0,5 Millimeter, bevorzugt zwischen 0,01 und 0,2 Millimeter, besonders bevorzugt zwischen 0,03 und 0,1 Millimeter und ganz besonders bevorzugt von im Wesentlichen 0,05 Millimeter, insbesondere mit einer Fehlertoleranz von maximal 15%. Die Kartusche ist sodann vorzugsweise derart ausgebildet, dass sie einem Innendruck von bis zu 10 bar, besonders bevorzugt bis zu 8 bar und ganz besonders bevorzugt bis zu 6 bar ohne Aufzuplatzen standhält (bei einer Temperatur von 20° C und einem Außendruck von 1 bar). Das Reservoir umfasst dabei vorzugsweise ein Volumen zwischen 10 und 500 Milliliter, besonders bevorzugt zwischen 30 und 90 Milliliter und ganz besonders bevorzugt von im Wesentlichen 60 Milliliter. Das Kartuschensystem weist insbesondere eine flüssige Getränkesubstanz auf, welche vorzugsweise kohlensäurehaltig ist. Besonders bevorzugt umfasst die flüssige Getränkesubstanz ein Getränkekonzentrat, insbesondere einen Sirup.

Die Kartusche kann einen napfförmig ausgebildeten Hauptkörper umfassen. Der napfförmige Hauptkörper ist vorzugsweise durch Tiefziehen oder Fließpressen hergestellt, wodurch vorteilhafterweise eine vergleichsweise kostengünstige und schnelle Herstellung ermöglicht wird. Insbesondere ist die Kartuschen auf einer Seite somit zwangsläufig hermetisch verschlossen, wodurch eine besonders stabile Ausführung der Kartusche realisiert wird. Vorzugsweise ist der Hauptkörper napfförmig mit einer zylinderförmigen Kartuschenwandung, die auf einer Seite durch einen Kartuschenboden verschlossen ist, ausgebildet, wobei die Kartuschenwandung und der Kartuschenboden insbesondere einstückig ausgebildet sind. Denkbar ist, dass die Kartuschenwandung und der Kartuschenboden aus einem Stück und insbesondere beide aus Aluminium bestehen, indem der Hauptkörper aus einem Aluminiumblech tiefgezogen wird.

Alternativ zum Tiefziehen oder Fließpressen kann der Hauptkörper auch dadurch gebildet sein, dass ein Aluminiumblech zu einem zylinderförmigen Rohr gebogen wird und anschließend die Stoßseiten des zu dem Rohr gebogenen Aluminiumblechs miteinander verklebt, verschweißt und/oder verpresst werden, sodass ein Hauptkörper mit Längsnaht entsteht. Zusätzlich wird der Kartuschenboden als separater Deckelkörper ausgeformt, insbesondere durch Tiefziehen oder Fließpressen eines weiteren Aluminiumblechs. Dieser als separater Deckelkörper ausgebildete Kartuschenboden kann anschließend über dasjenige Ende der zum Rohr gebogenen Kartuschenwandung gestülpt werden, welches der Kartuschenaufnahme abgewandt ist und dort mit der Kartuschenwandung umlaufend verklebt, verschweißt und/oder verpresst werden. Insbesondere wird der Deckelkörper zur Bildung des Kartuschenbodens auf die rohrförmige Kartuschenwandung aufgecrimpt.

Denkbar ist, dass der Hauptkörper in seiner Ausgangslage auf seiner dem Kartuschenboden gegenüberliegenden Seite von einem Dichtelement verschlossen ist. In vorteilhafter Weise sorgt das Dichtelement dafür, dass die Getränkesubstanz vor dem Start des Getränkeherstellungsprozesses innerhalb des Reservoirs verbleibt und dort für eine lange Haltbarkeit und ein gleichbleibendes Aroma hermetisch abgedichtet ist.

Denkbar ist, dass das Dichtelement einen insbesondere starren oder halbstarren Dichtkörper mit einer Vorstanzung aufweist. Im Bereich der Vorstanzung ist ein Teilbereich des Dichtkörpers teilweise gestanzt. Dies bedeutet, dass der Teilbereich nicht vollständig aus dem Dichtelement ausgestanzt, sondern nur teilweise ausgestanzt ist, so dass er im Ausgangszustand der Kartusche in seinen Eckbereichen noch einstückig mit dem übrigen Dichtelement verbunden bleibt. Somit bleibt das Reservoir 7 im Ausgangszustand hermetisch abdichtet. Das Dichtelement ist hierbei insbesondere der aus Aluminium gefertigte Dichtkörper. Die Größe der Stanzung entspricht vorzugsweise im Wesentlichen der später durch den Aufstechdorn zu erzeugende Durchgangsöffnung im Dichtelement. Vorzugsweise ist in einem Randbereich des Teilbereichs durch die teilweise Stanzung eine Sollbruchstelle gegenüber dem übrigen Dichtkörper ausgebildet, die bei einem Kontakt des Teilbereichs mit einem Aufstechdorn der Getränkezubereitungsmaschine (siehe unten) zumindest teilweise aufreißt, um die Durchgangsöffnung freizugeben. Dadurch, dass der Teilbereich aus dem Dichtkörper ausgestanzt ist, weist er im Wesentlichen die identische Größe bzw. den identischen Durchmesser wie die Durchgangsöffnung auf, in welcher während der Getränkeherstellung noch dazu der Aufstechdorn angeordnet ist. Hierdurch wird vorteilhafterweise verhindert, dass der abgelöste Teilbereich durch die Durchgangsöffnung 18' in die Mischkammer 8 gelangt.

Denkbar ist, dass das Dichtelement einen insbesondere starren oder halbstarren Dichtkörper mit einer Durchgangsöffnung aufweist. Das Dichtelement ist insbesondere aus Aluminium gefertigt und am Hauptkörper befestigt. Denkbar ist, dass der Dichtkörper an den Hauptkörper gecrimpt, geklebt, geklemmt, geschweißt und/oder mit dem Hauptkörper verpresst ist. Die Durchgangsöffnung ist entweder zentral oder zum Zentrum versetzt im Dichtkörper ausgebildet. Der Dichtkörper ist somit scheiben- und/oder ringförmig ausgebildet. Alternativ ist denkbar, dass der Dichtkörper ebenfalls napfförmig ausgebildet ist, wobei der vom Napfboden abstehende umlaufende Teil parallel zur Kartuschenwandung verläuft und mit diesem Teil der Kartuschenwandung verpresst bzw. gecrimpt ist. Der vom Napfboden abstehende Teil ist insbesondere auf der Innenseite der Kartuschenwandung angeordnet, um der Kartusche ein ästhetisch ansprechendes äußeres Erscheinungsbild zu geben. Der Dichtkörper weist in seinem typischen Wandungsbereich vorzugsweise eine Wandstärke zwischen 0,09 und 0,5 Millimeter, bevorzugt zwischen 0,1 und 0,3 Millimeter, besonders bevorzugt zwischen 0,15 und 0,25 Millimeter und ganz besonders bevorzugt von im Wesentlichen 0,2 Millimeter auf, insbesondere mit einer Fehlertoleranz von maximal 15%.

Denkbar ist, dass das Dichtelement eine Dichtfolie aufweist, welche die Durchgangsöffnung in der Ausgangslage des Kartuschensystems verschließt, wobei die Dichfolie vorzugsweise eine Kunststofffolie, eine Aluminiumfolie oder eine Mehrschichtfolie aus Kunststoff und/oder Aluminium ist. Auf diese Weise wird trotz der Durchgangsöffnung im Dichtkörper eine hermetische Abdichtung des Reservoirs erzielt, wobei während des Getränkeherstellungsprozesses die Dichtfolie von einem Aufstechdorn (siehe unten) der Kartuschenaufnahme leicht perforierbar ist, um die Getränkesubstanz aus dem Reservoir möglichst schnell in die Mischkammer der Kartuschenaufnahme zu überführen. Vorzugsweise ist ein umlaufender Rand der Dichtfolie am Dichtelement befestigt, insbesondere festklebt, festgesiegelt und/oder festgeschweißt.

Denkbar ist, dass das Dichtelement eine Dichfolie, vorzugsweise eine Kunststofffolie, eine Aluminiumfolie oder eine Mehrschichtfolie aus Kunststoff und/oder Aluminium, umfasst, die insbesondere am Rand der Kartuschenwandung befestigt ist. In dieser Ausführungsform weist das Dichtelement keinen zusätzlichen Dichtkörper auf, sondern die Öffnung des Hauptkörpers wird direkt und insbesondere ausschließlich durch die Dichtfolie hermetisch verschlossen, die unmittelbar am Rand der Kartuschenwandung befestigt ist. Vorzugsweise ist dafür ein umlaufender peripherer Befestigungsbereich des Dichtelements an die Kartuschenwandung und insbesondere an den Rand der Kartuschenwandung gecrimpt, geklebt, gesiegelt und/oder geschweißt ist.

Denkbar ist, dass sich der Befestigungsbereich dabei auf der Innenseite oder der Außenseite der Kartuschenwandung zumindest teilweise parallel zur Kartuschenwandung erstreckt. In diesem Fall ist die Dichtfolie ebenfalls napfartig ausgebildet bzw. geformt. Denkbar ist, dass auch die Dichtfolie in diese Form tiefgezogen ist.

Der Dichtkörper des Dichtelements könnte auch als Art einer Crimpkappe ausgebildet sein. Denkbar ist, dass die Kartuschenwandung einen umlaufenden Rand umfasst, um welchen der Dichtkörper zur Befestigung an der Kartusche gecrimpt ist. Alternativ könnte das Dichtelement auf das Ende der Kartusche aufgeschraubt sein. Ein Befestigungsbereich der Kartusche ist hierfür insbesondere mit einem Außengewinde versehen, auf welches der Dichtkörper aufgeschraubt wird. Hierfür weist der Dichtkörper insbesondere ein zum Außengewinde komplementäres Innengewinde auf. Die Verschraubung ist dabei vorzugsweise derart ausgelegt, dass lediglich ein Aufschrauben mit anschließendem Verrasten ermöglicht wird, so dass durch die Verrastung ein späteres Losschrauben verhindert wird.

Denkbar ist, dass am Rand der Kartuschenwandung ein insbesondere umlaufende Verbindungsmittel, insbesondere eine Rastsicke, ein Rastwulst oder einen Hinterschnitt, zur Verbindung der Kartusche mit dem Dichtelement und/oder der Kartuschenaufnahme aufweist. Vorzugsweise weist das Dichtelement und/oder die Kartuschenaufnahme ein zum Verbindungsmittel insbesondere komplementäres Gegenverbindungsmittel, insbesondere eine weitere Rastsicke, ein Rastwulst oder ein Hinterschnitt, auf, welches form-, kraft- und/oder stoffschlüssig mit dem Verbindungsmittel verbunden ist. Vorzugsweise wird somit eine stabile und kostengünstig herstellbare Verbindung zwischen der Kartusche und der Kartuschenaufnahme und/oder zwischen der Kartusche und dem Dichtelement erzielbar.

Denkbar ist, dass der Befestigungsbereich zumindest teilweise zwischen dem Verbindungsmittel und dem Gegenverbindungsmittel angeordnet und insbesondere eingeklemmt, eingeschweißt und/oder eingeklebt ist. In vorteilhafter Weise wird das Dichtelement, insbesondere der Rand des Dichtkörpers oder der Rand der Dichtfolie, während des Getränkeherstellungsprozesses zusätzlichen zwischen dem Verbindungsmittel und dem Gegenverbindungsmittel, also von beiden Seite, fixiert. Innerhalb des Reservoirs kann somit ein vergleichsweiser großer Überdruck erzeugt werden, ohne dass die Gefahr eines Ablösens des Dichtelements von der Kartuschenwandung droht. Alternativ ist auch denkbar, dass sich der Befestigungsbereich auf der Innenseite der Kartuschenwandung befindet, so dass der Rand der Kartuschenwandung zwischen dem Befestigungsbereich und der Kartuschenaufnahme angeordnet ist. In diesem Falle ist also das Verbindungsmittel zwischen dem Befestigungsmittel und dem Gegenverbindungsmittel angeordnet. Auch hierdurch kann eine besonders stabile Verbindung zwischen Hauptkörper, Kartuschenaufnahme und Dichtelement erzielt werden. Zusätzlich können auch dieser Ausführungsform das vorzugsweise umlaufende Verbindungsmittel und/oder Gegenverbindungsmittel als Rastsicke, Rastwulst, Hinterschnitt oder dergleichen ausgebildet sein. Besonders bevorzugt ist vorgesehen, dass sich sowohl der Befestigungsbereich des Dichtkörpers als auch der Randbereich der Dichtfolie zwischen dem Verbindungsmittel und dem Gegenverbindungsmittel angeordnet sind.

Denkbar ist, dass die Kartuschenwandung oder das Dichtelement einen umlaufenden Rand umfasst, um welchen die Wandung der Kartuschenaufnahme gecrimpt ist.

Alternativ könnte die Kartuschenaufnahme auf das Ende der Kartusche oder auf das Dichtelement aufgeschraubt sein. Ein Befestigungsbereich der Kartusche oder des Dichtelements ist hierfür insbesondere mit einem Außengewinde versehen, auf welches die Kartuschenaufnahme aufgeschraubt wird. Hierfür weist die Kartuschenaufnahme ein zum Außengewinde komplementäres Innengewinde auf. Die Verschraubung ist dabei vorzugsweise derart ausgelegt, dass lediglich ein Aufschrauben mit anschließendem Verrasten ermöglicht wird, so dass durch die Verrastung ein späteres Losschrauben verhindert wird.

Denkbar ist, dass die Kartuschenaufnahme eine Grundstruktur aufweist, welche vorzugsweise zumindest teilweise und insbesondere vollständig aus Kunststoff gefertigt ist. Hierdurch wird vorteilhafterweise eine kostengünstige Herstellung erzielt. Die Grundstruktur weist insbesondere eine napfförmige Ausgestaltung auf, deren offene Seite in Richtung der Kartusche ausgerichtet ist, wobei an einer der Kartusche gegenüberliegenden Bodenseite eine Getränkeauslassöffnung und eine nach außen offene Dornführung ausgebildet sind und wobei an der Bodenseite oder einer Seitenwandung der Grundstruktur eine Fluidzuführung ausgebildet ist. Diese Kartuschenaufnahme hat den Vorteil, dass die Fluidzuführung nicht in das Reservoir der Kartusche, sondern in die vom Reservoir separierte Mischkammer mündet. Hierdurch verhindert, dass durch die Fluidzuführung während des Getränkeherstellungsprozesses eine Rückkontamination der Getränkezubereitungsmaschine erfolgt. Hierfür wird das Reservoir nicht von dem Fluid durchspült, sondern die Getränkesubstanz und das Fluid gelangen vielmehr getrennt voneinander in die Mischkammer der Kartuschenaufnahme. Das Fluid wird direkt in die Mischkammer geleitet, während die Getränkesubstanz unabhängig vom Fluid in die Mischkammer überführt wird. Insbesondere ist zu diesem Zweck innerhalb der Dornführung ein verschiebbar gelagerter Aufstechdorn angeordnet, wobei der Aufstechdorn zwischen einer eingefahrenen Position, in welcher der Aufstechdorn von dem Dichtelement und insbesondere der Dichtfolie (oder dem Teilbereich) beabstandet ist, und einer ausgefahrenen Position, in welcher der Aufstechdorn das Dichtelement und insbesondere die Dichtfolie durchsticht (oder den Teilbereich vom Dichtelement teilweise oder vollständig abreißt) und bis in das Reservoir ragt, verschiebbar ist. Der Aufstechdorn ist im Ausgangszustand des Kartuschensystems also in der eingefahrenen Position, so dass das Reservoir durch ddas Dichtelement und insbesondere die Dichtfolie hermetisch abgedichtet ist, und kann zum Öffnen des Dichtelements der Kartusche von der eingefahrenen Position in die ausgefahrene Position überführt werden. In der ausgefahrenen Position wird das Dichtelement von dem Aufstechdorn perforiert oder eine Vorstanzung aufgerissen, so dass die Getränkesubstanz durch insbesondere wenigstens einen Seitenkanal am Aufstechdorn an dem Dichtelement vorbei in die Mischkammer gelangt. Es wird somit eine einfache und zuverlässige Öffnung einer zuvor aromadicht verschlossenen Kartusche in einer Getränkezubereitungsmaschine ermöglicht. Zudem hat sich gezeigt, dass eine Rückkontamination der Getränkezubereitungsmaschine unterbunden wird, insbesondere da im Reservoir kein direkt auf die Fluidzuführung wirkender Überdruck erzeugt wird. Die Ausbildung der Mischkammer in der Kartuschenaufnahme, die in die Getränkezubereitungsmaschine reversibel einsetzbar ist, sorgt vorteilhafterweise dafür, dass die Mischkammer Teil des austauschbaren Kartuschensystem ist. Auf diese Weise wird eine Verunreinigung der Getränkezubereitungsmaschine durch die Getränkesubstanz wirksam vermieden, weil lediglich Teile des austauschbaren Einweg- oder Mehrwegkartuschensystems mit der Getränkesubstanz in Kontakt gelangen.

Denkbar ist, dass das Kartuschensystem und insbesondere die Kartuschenaufnahme wenigstens eine Stützstruktur aufweist, welche die Dichtfolie in Richtung der Kartuschenaufnahme und insbesondere in Richtung der Mischkartusche unterstützt. Auf diese Weise wird ein Einreißen der Dichtfolie insbesondere beim Druckaufbau im Reservoir während des Getränkeherstellungsprozesses verhindert. Die Stützstruktur umfasst insbesondere eine säulen-, brücken-, gitter- oder zylinderförmige Struktur, die vom Boden der Mischkammer in Richtung Reservoir ragt und auf welcher die Dichtfolie teilweise aufliegt.

Denkbar ist, dass der Aufstechdorn ein zylinder- oder kegelstumpfförmiges Basisteil und ein sich in Richtung des Reservoirs erstreckendes Aufstechteil umfasst, wobei das Aufstechteil in Form eines schräg abgeschnittenen Kegelstumpfs ausgebildet ist. Vorzugsweise ist das Aufstechteil ferner derart ausgebildet ist, dass eine schräge Schnittfläche des schräg abgeschnittenen Kegelstumpfs im Wesentlichen dem Reservoir zugewandt ist, wobei der ovale Umfang der Schnittfläche zumindest teilweise eine Schnittkante zum Perforieren des Dichtelements darstellt. Es hat sich gezeigt, dass die Schnittfläche, welche durch einen schrägen Schnitt durch den Kegelstumpf erzeugt wird, einerseits das Dichtelement einfach und mit ausreichend wenig Kraftaufwand schneidet und andererseits keine Späne oder lose Stücke von dem Dichtelement abtrennt, welche ansonsten das Getränk in ungewollter Weise verunreinigen würden. Die Dichtelementperforation sieht vorteilhafterweise derart aus, dass an derjenigen Seite des Aufstechdorns, an welchem die maximal in Richtung des Reservoirs überstehende Schnittkante ausgebildet ist, das Material des Dichtelements mit einem glatten Schnitt durchtrennt ist, während im Bereich der Schnittfläche des Aufstechteils das abgeschnittene Material des Dichtelements noch mit dem übrigen Dichtelement verbunden ist und vorzugsweise aufrollt oder zusammengefaltet ist. Vorzugsweise umfasst der Aufstrechdorn ein zwischen dem Basisteil und dem Aufstechteil angeordnetes Zwischenteil, welcher kegelstumpfförmig ausgebildet ist, wobei zwischen dem Basisteil und dem Zwischenteil ein umlaufender Absatz ausgebildet ist und wobei zwischen dem Aufstechteil und dem Zwischenteil eine umlaufende Kante ausgebildet ist. Vorteilhafterweise wird somit ein stabiler Aufstechdorn gebildet. Der Ausbildung der Kante hat den Vorteil, dass die Seitenkanäle, sofern sie sich über die Kante erstrecken, reservoirseitig einen vergrößerten Eingang aufweisen und somit die Überführung der Getränkesubstanz in Richtung Mischkammer erleichtert wird. Der Absatz dient dazu gegen einen Anschlag der Dornführung anzuschlagen, wenn der Aufstechdorn in der aufgefahrenen Position ist, sodass die Ausfahrbewegung des Aufstechdorns in Richtung der Kartusche begrenzt wird.

Denkbar ist, dass die Kartuschenaufnahme eine Mehrzahl von Seitenkanälen aufweist, wobei sich jeder Seitenkanal parallel zum Aufstechdorn im Bereich des Aufstechteils und im Bereich des Zwischenteils erstreckt. Die Seitenkanäle sind dabei insbesondere jeweils in Form einer in die Außenfläche des Aufstechdorns eingebrachte einseitig offene Nut ausgebildet. Vorzugsweise sind die Seitenkanäle zumindest teilweise in einem zur Schnittfläche rückwärtigen Umfangsbereich des Aufstechdorns ausgebildet. Dies hat den Vorteil, dass die Seitenkanäle an derjenigen Seite der Dichtelementperforation angeordnet sind, an welcher ein Schnitt im Material erzeugt wurde, und nicht an der gegenüberliegenden Seite, an welcher das abgeschnittene Material noch mit dem übrigen Dichtelement verbunden ist. Die Getränkesubstanz kann somit vergleichsweise ungehindert in die Seitenkanäle einströmen.

Denkbar ist, dass der Querschnitt der Seitenkanäle und/oder die Anzahl der Seitenkanäle an die Viskosität der Getränkesubstanz angepasst ist, so dass die Seitenkanäle den Fluss der Getränkesubstanz in Richtung Mischkammer kontrollieren bzw. begrenzen. Bei einer hohen Viskosität werden mehrere Seitenkanäle oder Seitenkanäle mit größerem Querschnitt verwendet, während bei einer niedrigeren Viskosität weniger Seitenkanäle oder Seitenkanäle mit geringerem Querschnitt vorgesehen sind. Für jede Kartusche existiert somit eine passende Kartuschenaufnahme.

Denkbar ist, dass der Aufstechdorn eine Verdrehsicherung in Form eines vom Basisteil radial abstehenden Steges aufweist. In vorteilhafter Weise wird somit eine Verdrehung des Aufstechdorns bei der Überführung von der eingezogenen Position in die ausgefahrene Position verhindert. Zudem wird sichergestellt, dass die Seitenkanäle auf derjenigen Seite des Aufstechdorns angeordnet ist, welche dem Getränkeauslauf der Mischkammer abgewandt und insbesondere der Fluidzuführung zugewandt ist. Auf diese Weise wird eine verbesserte Durchmischung der Getränkesubstanz und dem Fluid innerhalb der Mischkammer erzielt.

Denkbar ist, dass der Aufstechdorn eine integrierte Druckluftleitung, welche die Kartuschenentladeeinrichtung ist, aufweist, wobei sich die Druckluftleitung entlang des Aufstechdorns insbesondere von einem ersten Ende des Aufstechdorns bis zu einem zweiten Ende des Aufstechdorns erstreckt. In vorteilhafter Weise sind somit drei Funktionen in den Aufstechdorn integriert: 1. Der Aufstechdorn umfasst den Aufstechteil, um das Dichtelement zu perforieren und somit die Kartusche zu öffnen 2. Der Aufstechdorn umfasst die Seitenkanäle, um ein Überführen der Getränkesubstanz in die Mischkammer zu ermöglichen 3. Der Aufstechdorn umfasst die integrierte Druckluftleitung, um Druckluft in das Reservoir zu blasen, wodurch die Getränkesubstanz unter Druck in die Mischkammer gedrückt wird.

Vorzugsweise ist am zweiten Ende ein Druckluftanschluss zum Anschluss an eine Druckluftquelle und am ersten Ende ein Druckluftauslass zum Einblasen von Druckluft in das Reservoir ausgebildet. Die in die Kartuschenaufnahme integrierte Kartuschenentladeeinrichtung umfasst im Sinne also zunächst nur eine Druckluftleitung, durch welche Druckluft von außen in das Reservoir eingeleitet werden kann. Die Kartuschenaufnahme ist derart ausgebildet, dass durch die Druckluft die Getränkesubstanz aus dem Reservoir in die Mischkammer gedrückt wird. Die Druckluft wird insbesondere von der Getränkezubereitungsmaschine bereitgestellt. Denkbar ist, dass eine Druckluftquelle direkt an den Druckluftanschluss angekoppelt wird, sobald das Kartuschensystem in die Getränkezubereitungsmaschine eingesetzt wird. Dies hat den Vorteil, dass eine Rückkontamination in Richtung der Getränkezubereitungsmaschine wirksam vermieden wird, weil die Kartuschenentladeeinrichtung insbesondere sofort beim Einsetzen des Kartuschensystems unter Druck steht und somit verhindert wird, dass Getränkesubstanz in Richtung der Druckluftleitung und insbesondere in Richtung der Druckluftquelle der Getränkezubereitungsmaschine wandert. Die Getränkesubstanz kann sich ausgehend vom Reservoir somit lediglich in Richtung der Mischkammer bewegen.

Denkbar ist, dass der Druckluftauslass als Öffnung in der Schnittfläche ausgebildet ist. Dies hat den Vorteil, dass die in das Reservoir einströmende Luft auf einer den Seitenkanälen abgewandten Seite des Aufstechdorns eingeblasen wird, so dass das Ableiten der Getränkesubstanz in die Mischkammer nicht behindert wird. Vorzugsweise bildet sich im Reservoir somit ein Wirbel aus, welche eine nahezu restlose Entleerung des Reservoirs begünstigt.

Der Druckluftanschluss ist insbesondere als Öffnung im Basisteil ausgebildet, wobei der Basisteil derart in der Kartuschenaufnahme angeordnet ist, dass der Druckluftanschluss von außerhalb der Kartuschenaufnahme zugänglich ist. Auf diese Weise wird das Anschließen der Druckluftleitung an die Druckluftquelle begünstigt.

Denkbar ist, dass die Dornführung ein Führungsteil mit einem innenliegenden Führungskanal zur Aufnahme des Aufstechdorns aufweist, wobei der Führungskanal des Führungsteils im Wesentlichen zylinder- oder kegelstumpfförmig ausgebildet ist und wobei an einem der Kartusche zugewandten Ende des Führungsteils ein umlaufender Anschlag ausgebildet ist, welcher die Bewegung des Aufstechdorns in Richtung des Reservoirs begrenzt, wobei der Anschlag insbesondere einen Bereich mit verringertem Durchmesser umfasst. Vorteilhafterweise wird somit eine zuverlässige Führung des Aufstechdorns bei der Bewegung von der eingefahrenen Position in die ausgefahrene Position erzielt. Vorzugsweise ist innerhalb der Wandung des Führungskanals eine zum Steg korrespondierende Nut als Verdrehsicherung ausgebildet, so dass eine ungewollte Verdrehung des Aufstechdorns unterbunden wird. Das Führungssteil ist vorzugsweise in der Mischkammer angeordnet und steht dabei von einem Boden der Mischkammer in Richtung der Kartusche vor.

Denkbar ist, dass der Aufstechdorn als Kunststoffteil und insbesondere als Kunststoff-Spritzgussteil ausgebildet ist. Auf diese Weise wird eine kostengünstige Herstellung ermöglicht. Grundsätzlich wäre es alternativ aber auch denkbar, den Aufstechdorn als Metallteil auszubilden.

Denkbar ist, dass der Aufstechdorn derart ausgebildet ist, dass er beim Einsetzen des Kartuschensystems in die Getränkezubereitungsmaschine von einem Auslöseelement der Getränkezubereitungsmaschine von der eingefahrenen Position in die ausgefahrene Position überführbar ist.

Denkbar ist, dass die Mischkammer einen Getränkeauslauf aufweist, durch welchen das aus einer Vermischung der Getränkesubstanz mit dem Fluid gebildete Getränk abgegeben wird, wobei das Kartuschensystem vorzugsweise derart ausgebildet ist, dass das Getränk aus dem Getränkeauslauf direkt in ein portables Gefäß einleitbar ist. In vorteilhafter Weise gerät somit weder die Getränkesubstanz noch das erzeugte Getränk in Kontakt mit einem Teil der Getränkezubereitungsmaschine, so dass nahezu jegliche (Rück-)Kontamination der Getränkezubereitungsmaschine verhindert wird. Das Fluid wird der Mischkammer separat zugeführt. Vorzugsweise wird das Fluid unter Druck in die Mischkammer eingeleitet. Das Fluid wird insbesondere von der Getränkezubereitungsmaschine bereitgestellt. Denkbar ist, dass eine Fluidquelle direkt an einen entsprechenden Fluidanschluss der Kartuschenaufnahme angekoppelt wird, sobald das Kartuschensystem in die Getränkezubereitungsmaschine eingesetzt wird. Der Fluidanschluss steht dabei über eine Fluidleitung in Fluidverbindung mit der Mischkammer. Dies hat den Vorteil, dass eine Rückkontamination in Richtung der Getränkezubereitungsmaschine wirksam vermieden wird, weil der Fluidanschluss insbesondere sofort beim Einsetzen des Kartuschensystems unter Druck steht und somit verhindert wird, dass Getränkesubstanz in Richtung der Fluidleitung und insbesondere in Richtung der Fluidquelle der Getränkezubereitungsmaschine wandert. Die Getränkesubstanz und das Getränk kann sich ausgehend von der Mischkammer somit lediglich in Richtung des Getränkeauslasses bewegen. Das Fluid umfasst insbesondere Wasser, vorzugsweise unter Druck stehendes, gekühltes und/oder karbonisiertes Trinkwasser.

Denkbar ist, dass die Mischkammer mit Mischstrukturen versehen ist. Die Mischstrukturen sorgen in vorteilhafter Weise für eine verbesserte Durchmischung von Getränkesubstanz und Fluid. Hierfür sind die Mischstrukturen insbesondere derart ausgebildet, dass das in die Mischkammer einströmende Fluid verwirbelt wird. Denkbar ist, dass die Mischstruktur einen oder mehrere Mischstege umfasst, welche im Bereich der Fluidzuführung am Boden der Mischkammer angeordnet sind und sich im Wesentlichen senkrecht zum Einströmrichtung des Fluides erstrecken. Die Mischstege fungieren somit als Barrieren für das Fluid, wodurch das Fluid aufgewirbelt wird und eine bessere Durchmischung mit der Getränkesubstanz erzielt wird.

Denkbar ist, dass die Fluidzuführung mit Fluid gespeist wird, welches durch ein Kühlaggregat gekühlt wird, wobei das Kühlaggregat Teil der Getränkezubereitungsmaschine oder eines mit der Getränkezubereitungsmaschine in Wirkverbindung stehenden separaten Kühlschranks ist. In vorteilhafter Weise sind somit Kaltgetränke herstellbar, auch wenn die Kartusche nicht gekühlt ist und beispielweise Zimmertemperatur aufweist. Die Integration des Systems in einen bestehenden Kühlschrank hat den Vorteil, dass das bestehende Kühlaggregat des Kühlschranks für die Getränkezubereitungsmaschine in effizienter Weise einfach mitgenutzt werden kann. Insbesondere bei sogenannten "side-by-side"-Kühlschränken (oft auch als amerikanische Kühlschränke bezeichnet) findet sich in der Front ausreichend Bauraum zur Integration des Systems. Denkbar ist, dass es sich bei der Getränkezubereitungsmaschine um ein Nachrüstset für einen solchen Kühlschrank handelt. Das Kühlaggregat umfasst vorzugsweise eine Kompressorkühleinheit, eine Absorberkühleinheit oder einen thermoelektrischen Kühler.

Denkbar ist, dass die Fluidzuführung mit Fluid gespeist wird, welches durch einen Karbonisierer mit Kohlensäure versetzt wird. Denkbar ist, dass der Karbonisierer Teil der Getränkezubereitungsmaschine ist und wobei der Karbonisierer eine Aufnahme für eine CO₂-Patrone und eine Zuführeinrichtung zum Versetzen des Fluides mit CO₂ aus der CO₂-Patrone aufweist. Vorteilhafterweise lassen sich mit dem System somit auch mit Kohlensäure versetzte Erfrischungsgetränke herstellen. Alternativ wäre auch denkbar, dass der Karbonisierer einen externen CO₂-Anschluss aufweist. Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- Figuren 1a, 1b und 1c: zeigen eine perspektivische Darstellung, eine schematische Schnittbildansicht und das allgemeine Funktionsprinzip eines Kartuschensystems.
- Figur 2: zeigt eine schematische Schnittbildansicht eines Kartuschensystems.
- Figuren 3a und 3b: zeigen eine schematische Schnittbildansicht und das allgemeine Funktionsprinzip eines Kartuschensystems.
- Figur 4: zeigt eine schematische Schnittbildansicht eines Kartuschensystems.
- Figur 5: zeigt eine schematische Schnittbildansicht eines Kartuschensystems.
- Figur 6: zeigt eine schematische Schnittbildansicht eines Kartuschensystems.
- Figur 7: zeigt eine schematische Schnittbildansicht eines Kartuschensystems.
- Figuren 8a und 8b: zeigen eine Perspektivansicht und eine schematische Schnittbildansicht eines Kartuschensystems.

In den verschiedenen Figuren sind gleiche Teile stets mit den gleichen Bezugszeichen versehen und werden daher in der Regel auch jeweils nur einmal benannt bzw. erwähnt.

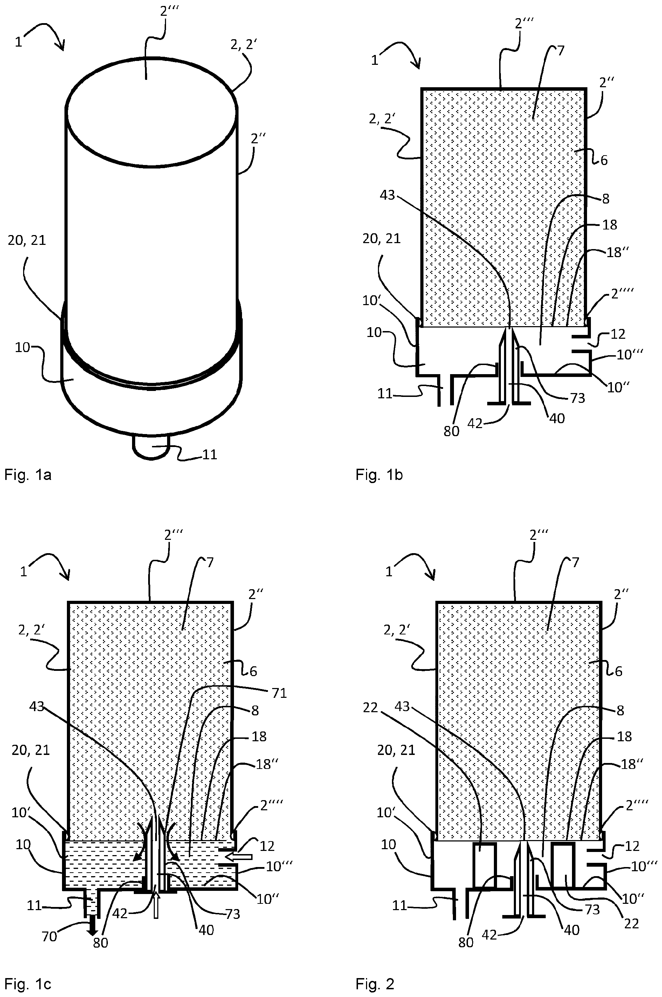

In **Figuren 1a**, **1b und 1c** sind eine perspektivische Darstellung, eine schematische Schnittbildansicht und das allgemeine Funktionsprinzip eines Kartuschensystems.

Das abgebildete Kartuschensystem 1 ist dazu vorgesehen, in eine Getränkezubereitungsmaschine (nicht dargestellt) eingesetzt zu werden, um ein Getränk 70 zuzubereiten. Das Kartuschensystem 1 weist hierfür eine Kartusche 2, die mit einer Getränkesubstanz 7 gefüllt ist, und eine mit der Kartusche 2 verbundene Kartuschenaufnahme 10 auf. Innerhalb der Getränkezubereitungsmaschine 3 wird mit Hilfe der Getränkesubstanz 7 und einer zusätzlichen Wasserquelle, im Folgenden als Fluidquelle 41 bezeichnet, ein entsprechendes Getränk 70 erzeugt. Die Kartusche 2 ist dabei vorzugsweise mit einer vorportionierten Menge an Getränkesubstanz 7, die zur Erzeugung einer gezielten Trinkportion, beispielsweise eine Trinkglasfüllung des gewünschten Getränks 70, notwendig ist, befüllt. Die Getränkesubstanz 7 ist insbesondere ein flüssiges und kohlensäurehaltiges Getränkekonzentrat in Form von Sirup.

Grundsätzlich stehen insbesondere eine Mehrzahl unterschiedlicher Kartuschensysteme 1 zur Verfügung, deren Kartuschen 2 bzw. Reservoirs 6 zur Erzeugung verschiedener Getränke 70 mit unterschiedlichen Getränkesubstanzen 7 befüllt sind. Wenn der Anwender des Systems 1 ein bestimmtes Getränk 70 trinken möchte, braucht er lediglich aus der Mehrzahl der unterschiedlichen Kartuschensysteme 1 dasjenige Kartuschensystem 1, welche die entsprechende Getränkesubstanz 7 zur Erzeugung des gewünschten Getränks 70 enthält, auswählen, in eine Halteeinheit der Getränkezubereitungsmaschine einsetzen und den Getränkeherstellungsprozess an der Getränkezubereitungsmaschine starten, beispielsweise durch Drücken eines Startknopfs, entsprechendes Berühren eines berührungssensitiven Displays, durch Gestik- oder Sprachsteuerung oder mittels einer geeigneten Applikation auf einem Mobiltelefon. Denkbar ist auch, dass der Getränkeherstellungsprozess automatisch startet, wenn das Einlegen eines neuen Kartuschensystems 1 in die Halteeinheit erkannt wird. In jedem der vorgenannten Fälle wird das gewünschte Getränk 70 sodann automatisch erzeugt, in ein Trinkgefäß geleitet und dem Anwender somit bereitgestellt. Anschließend wird das verbrauchte Kartuschensystem 1 entfernt und entsorgt. Die Getränkezubereitungsmaschine 3 ist nun wieder bereit, um mit einem beliebigen neuen Kartuschensystem 1 befüllt zu werden, um ein weiteres Getränk 70 zu erzeugen.

Die Getränkesubstanz 7 umfasst vorzugsweise flüssige Pre-Mix-Bestandteile für Erfrischungsgetränke, wie koffein-, kohlensäure-, frucht- und/oder zuckerhaltige Limonaden und Säfte, Bier(misch)getränke oder sonstige alkoholische oder nicht alkoholische (Misch-) Getränke.

Das Kartuschensystem 1 umfasst eine Kartusche 2 in Form eines zylinderförmigen Behälters. Der Behälter ist hohl und beinhaltet somit ein Reservoir 6 für die Getränkesubstanz 7. Die Kartusche 2 wird gebildet durch einen aus Aluminium gefertigten Hauptkörper 2', der napfförmig ausgebildet ist. Napfförmig ausgebildet bedeutet hier, dass der Hauptkörper 2' einen Kartuschenboden 2‴ (in der Zeichnung oben dargestellt) und eine vom Kartuschenboden 2‴ rechtwinklig in Richtung der Kartuschenaufnahme 10 abstehende Kartuschenwandung 2" aufweist. Die Kartuschenwandung 2" ist dabei zylinderförmig und umlaufend ausgebildet, während der Kartuschenboden 2‴ in diesem Beispiel eine kreisrunde und scheibenförmig Ausgestaltung aufweist. Der Hauptkörper 2' wird während seiner Herstellung aus einem Aluminiumblech tiefgezogen und ausgestanzt (wahlweise zuerst tiefgezogen und dann ausgestanzt oder umgekehrt), so dass der Kartuschenboden 2‴ und die Kartuschenwandung 2" einstückig miteinander verbunden sind.

Auf einer dem Kartuschenboden 2‴ in axialer Richtung gegenüberliegenden Seite ist der Hauptkörper 2' durch ein Dichtelement 18 verschlossen. Bei der ersten Ausführungsform umfasst das Dichtelement 18 ausschließlich eine insbesondere dünne Dichtfolie 18", welche das Reservoir 6 verschließt, so dass die Getränkesubstanz 7 aromadicht verschlossen ist. Der äußere umlaufende Randbereich des Dichtelements 18 ist dafür umlaufend am Rand 2ʺʺ der Kartuschenwandung 2" befestigt. Vorzugsweise ist das Dichtelement 18 hier an den Rand 2ʺʺ der Kartuschenwandung 2" geklebt, gesiegelt oder geschweißt. Die Dichtfolie 18" umfasst insbesondere eine Kunststofffolie, eine Aluminiumfolie oder eine Mehrschichtfolie aus Kunststoff und/oder Aluminium.

Die Kartusche 2 ist mit der Kartuschenaufnahme 10 fest oder reversibel verbunden. Die Kartuschenaufnahme 10 wird insbesondere nach dem Herstellen (Tiefziehen und Stanzen oder Fließpressen und Stanzen) des Hauptkörpers 2', nach dem Befüllen der Kartusche 2 mit der Getränkesubstanz 7 und nach dem Verschließen des Reservoirs 6 durch Aufbringen des Dichtelements 18 mit der Kartuschenaufnahme 10 verbunden. Die Kartuschenwandung 2" weist zu diesem Zweck optional umlaufende Verbindungsmittel 20, insbesondere in Form einer umlaufenden Rastsicke auf. Die Kartuschenaufnahme 10 weist optional zum Verbindungsmittel 20 komplementäre Gegenverbindungsmittel 21, insbesondere in Form eines umlaufenden Rastwulstes auf, welche beim Verbinden der Kartusche 2 mit der Kartuschenaufnahme 10 in die Raststicke einrastet. Denkbar ist, dass die Kartuschenwandung 2" und die Kartuschenaufnahme 10 zusätzlich miteinander verklebt, verschweißt und/oder verpresst werden.

Der Hauptkörper 2' weist in seinem typischen Wandungsbereich vorzugsweise eine Wandstärke zwischen 0,01 und 0,5 Millimeter, bevorzugt zwischen 0,01 und 0,2 Millimeter, besonders bevorzugt zwischen 0,03 und 0,1 Millimeter und ganz besonders bevorzugt von im Wesentlichen 0,05 Millimeter, insbesondere mit einer Fehlertoleranz von maximal 15%. Die Kartusche ist sodann vorzugsweise derart ausgebildet, dass sie einem Innendruck von bis zu 10 bar, besonders bevorzugt bis zu 8 bar und ganz besonders bevorzugt bis zu 6 bar ohne Aufzuplatzen standhält (bei einer Temperatur von 20° C und einem Außendruck von 1 bar), auf. Die Kartusche 2 ist sodann vorzugsweise derart ausgebildet, dass sie einem Innendruck von bis zu 10 bar, besonders bevorzugt bis zu 8 bar und ganz besonders bevorzugt bis zu 6 bar ohne Aufzuplatzen standhält (bei einer Temperatur von 20° C und einem Außendruck von 1 bar). Das Reservoir 6 umfasst dabei vorzugsweise ein Volumen zwischen 10 und 500 Milliliter, besonders bevorzugt zwischen 30 und 90 Milliliter und ganz besonders bevorzugt von im Wesentlichen 60 Milliliter.

Die Kartuschenaufnahme 10 weist eine Mischkammer 8 auf, welche während des Getränkeherstellungsprozesses in Fluidverbindung mit dem Reservoir 6 steht, so dass mit Hilfe einer Kartuschenentladeeinrichtung der Kartuschenaufnahme 10 die Getränkesubstanz 7 zumindest teilweise aus dem Reservoir 6 in die Mischkammer 8 überführt werden kann. Die Kartuschenentladeeinrichtung umfasst zu diesem Zweck eine Druckluftleitung 40. Ein Ende der Druckluftleitung 40 ist mit einem Druckluftanschluss 42 verbunden, der mit einer Druckluftquelle der Getränkezubereitungsmaschine verbunden werden kann, um Druckluft in die Druckluftleitung 40 einzuleiten, während das andere Ende in einen Druckluftauslass mündet, der in Richtung des Reservoirs 6 geöffnet ist und Druckluft in das Reservoir 6 einleitet. Das Einleiten der Druckluft bewirkt, dass die Getränkesubstanz 7 in die Mischkammer 8 gedrückt wird.

In die Mischkammer 8 mündet ferner eine Fluidzuführung 12 der Kartuschenaufnahme 10, welche durch eine Fluidquelle der Getränkezubereitungsmaschine 3 gespeist wird. Denkbar ist, dass die Fluidzuführung eine Schnellkupplung aufweist, mit welcher die Fluidzuführung 12 an die Fluidquelle der Getränkezubereitungsmaschine angeschlossen werden kann. Die Schnellkupplung kann beispielsweise derart ausgebildet sein, dass beim Einsetzen des Kartuschensystems 1 in die Halteeinheit automatisch eine Fluidverbindung zwischen der Fluidquelle und der Mischkammer 8 über die Fluidzuführung 12 hergestellt wird. Während des Getränkeherstellungsprozesses gelangt über diese Fluidverbindung Fluid, insbesondere gekühltes und karbonisiertes Trinkwasser, von der Fluidzuführung 12 in die Mischkammer 8. Ferner gelangt während des Getränkeherstellungsprozesses Getränkesubstanz 7 von dem Reservoir 6 in die Mischkammer 8, wie vorstehend beschrieben. Durch Vermischung der Getränkesubstanz 7 mit dem Fluid in der Mischkammer 8 bildet sich das Getränk 70, welches die Mischkammer 8 sodann durch einen Getränkeauslauf 11 verlässt.

Die Kartuschenaufnahme 10 weist den Getränkeauslauf 11 auf, durch welchen das innerhalb der Mischkammer 8 erzeugte Getränk 70 die Mischkammer 8 verlässt und insbesondere direkt in das Trinkgefäß (nicht abgebildet) geleitet wird, d.h. ohne, dass Teile der Getränkezubereitungsmaschine in Kontakt mit dem Getränk 70 gelangen. Auf diese Weise wird Rücckontamination der Getränkezubereitungsmaschine verhindert. Das Trinkgefäß wird insbesondere direkt unterhalb des Getränkeauslaufs 11 angeordnet.

Nach Beendigung des Getränkeherstellungsprozesses wird das Kartuschensystem 1 aus der Halteeinheit entnommen, so dass die Getränkeherstellungsmaschine mit einem neuen und unverbrauchten Kartuschensystem 1 bestückt werden kann. Die Kartuschenaufnahme 10 kann optional wiederverwendet werden, indem es von der benutzten Kartusche 2 durch Lösen der Rastverbindung abgetrennt und auf eine neue Kartusche 2 geclipst wird.

Zur Herstellung der Fluidverbindung zwischen dem Reservoir 6 und der Mischkammer 8 weist die Kartuschenaufnahme 10 eine Dornführung 80 auf, in welcher ein Aufstechdorn 73 verschiebbar gelagert ist. Das Dichtelement 18 wird durch eine Überführung des verschiebbaren Aufstechdorns 73 zwischen einer eingefahrenen Position, in welcher der Aufstechdorn 73 von dem Dichtelement 18 beabstandet ist (Vgl. Figur 1b), und einer ausgefahrenen Position, in welcher der Aufstechdorn 73 das Dichtelement 18 durchsticht (Vgl. Figur 1c) und bis in das Reservoir 6 ragt, perforiert.

Die Außenwandung des Aufstechdorns 73 ist mit der Mehrzahl von Seitenkanälen 71 zum Leiten der Getränkesubstanz 7 vom Reservoir 6 in Richtung der Mischkammer 8, wenn das Dichtelement 18 durchstochen ist, versehen. Die Seitenkanäle 71 sind in Form von parallel zueinander verlaufenden einseitig offenen Nuten ausgebildet. Nach dem Durchstechen des Dichtelements 18 gelangen die Seitenkanäle 71 in Fluidverbindung mit dem Reservoir 6, so dass die Getränkesubstanz 7 die Ränder des durchstochenen Dichtelements 18 in Richtung der Mischkammer 8 umfließen kann.

Der Querschnitt der Seitenkanäle 71 und/oder die Anzahl der Seitenkanäle 71 ist dabei vorzugsweise an die Viskosität der Getränkesubstanz 7 angepasst ist, so dass die Seitenkanäle 71 den Fluss der Getränkesubstanz 7 in Richtung Mischkammer 8 kontrollieren bzw. begrenzen. Bei einer hohen Viskosität werden mehrere Seitenkanäle 71 und/oder Seitenkanäle 71 mit größerem Querschnitt verwendet, während bei einer niedrigeren Viskosität weniger Seitenkanäle 71 und/oder Seitenkanäle 71 mit geringerem Querschnitt vorgesehen sind.

In den Aufstechdorn 73 ist ferner die Druckluftleitung 40 integriert, welche als Kartuschenentladeeinrichtung fungiert. Die Druckluftleitung 40 mündet am Ende des Aufstechdorns 73 in das Reservoir 6, wenn sich der Aufstechdorn 73 in der ausgefahrenen Position befindet. An einer dem Reservoir 6 insbesondere abgewandten Seite des Aufstechdorns 73 ist der Druckluftanschluss 42 ausgebildet, der somit von außerhalb der Kartuschenaufnahme 10 zugänglich und an die Druckluftquelle der Getränkezubereitungsmaschine anschließbar ist.

Vorzugsweise wird der Aufstechdorn 73 beim oder nach dem Einsetzen des Kartuschensystems 10 in die Getränkezubereitungsmaschine oder nach dem Starten des Getränkeherstellungsprozesses von der eingefahrenen Position in die ausgefahrene Position überführt, vorzugsweise durch ein feststehendes Auslöseelement der Halteeinheit, gegen welches der Aufstechdorn 73 gedrückt wird. Der Aufstechdorn 71 ist vorzugsweise als Kunststoffteil und besonders bevorzugt als Kunststoff-Spritzgussteil ausgebildet.

Es ist vorzugsweise vorgesehen, dass sowohl die Fluidquelle als auch die Druckluftquelle direkt an die Fluidzuführung 12 bzw. den Druckluftanschluss 42 angekoppelt werden, sobald das Kartuschensystem 1 in die Getränkezubereitungsmaschine eingesetzt wird oder ein Getränkeherstellungsprozess gestartet wird und insbesondere bevor das Dichtelement 18 durchstochen wird. Auf diese Weise wird eine Rückkontamination in Richtung der Getränkezubereitungsmaschine wirksam vermieden, weil die Fluidzuführung 12 und die Kartuschenentladeeinrichtung insbesondere sofort beim Einsetzen des Kartuschensystems 1 unter Überdruck stehen und somit verhindert wird, dass Getränkesubstanz 7 in Richtung der Fluidquelle bzw. Druckluftquelle wandert. Die Getränkesubstanz 7 kann sich ausgehend vom Reservoir 6 somit lediglich in Richtung der Mischkammer 8 bewegen (siehe Figur 1c), sobald das Dichtelement 18 geöffnet wird.

Die Kartuschenaufnahme 10 umfasst eine Grundstruktur 10' mit einer napfförmigen Ausgestaltung. Die offene Seite dieser napfförmigen Ausgestaltung zeigt in Richtung Kartusche 2 und nimmt zumindest teilweise die Kartusche 2, insbesondere den Rand 2ʺʺ der Kartuschenwandung 2" auf. Auf einer gegenüberliegenden Bodenseite 10" weist die Grundstruktur 10' die Getränkeauslassöffnung 11 und die nach außen offene Dornführung 80 auf. An einer Seitenwandung 10‴ der Grundstruktur 10' ist die Fluidzuführung 12 ausgebildet. Die Grundstruktur 10' ist insbesondere als Kunststoffteil und besonders bevorzugt als Kunststoff-Spritzgussteil ausgebildet.

In **Figur 2** ist eine schematische Schnittbildansicht eines weiteren Kartuschensystems.

Die zweite Ausführungsform gleicht der anhand von Figuren 1a, 1b und 1c illustrierten und erläuterten ersten Ausführungsform, wobei im Unterschied die Kartuschenaufnahme 10 zusätzlich Stützstrukturen 22 aufweist, welche die Dichtfolie 18"unterstützten.

Die Stützstrukturen 22 umfassen im vorliegenden Beispiel säulen- und stützenartige Elemente, die sich von der Bodenseite 10" der Grundstruktur 10' (insbesondere innerhalb der Mischkammer 8) in Richtung des Reservoirs 6 soweit strecken, dass sich die Dichtfolie 18' auf den Elementen abstützen bzw. aufliegen kann und vor einem ungewollten Einreißen, insbesondere bei Transport und Lagerung des Kartuschensystems 1, geschützt wird.

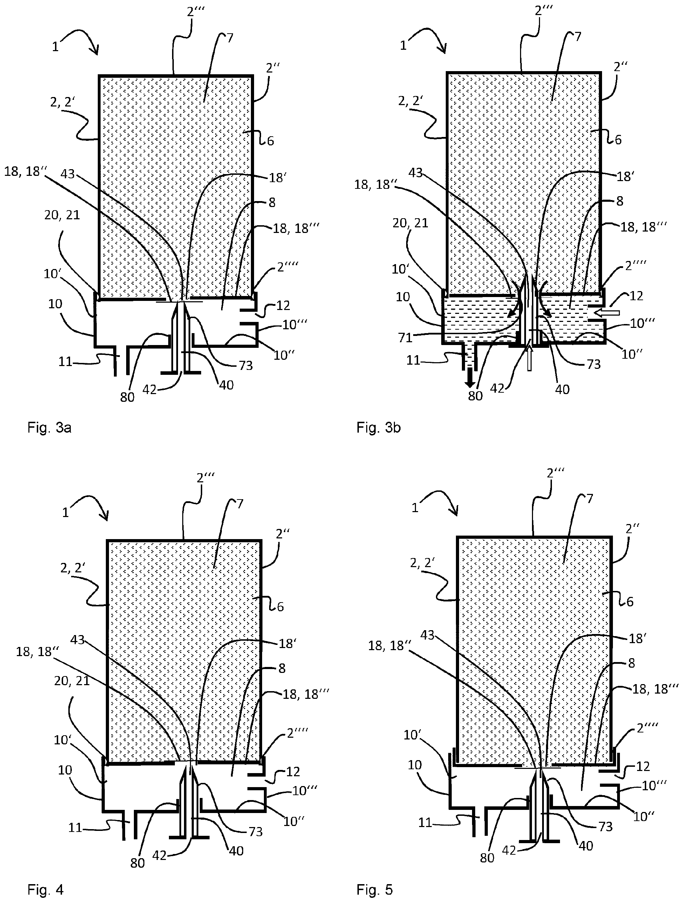

In **Figur 3a und 3b** sind eine schematische Schnittbildansicht und das allgemeine Funktionsprinzip eines weiteren Kartuschensystems. Die dritte Ausführungsform gleicht der anhand von Figuren 1a, 1b und 1c illustrierten und erläuterten ersten Ausführungsform, wobei im Unterschied das Dichtelement 18 nicht ausschließlich aus einer Dichtfolie 18" besteht, sondern einen starren oder halbstarren Dichtkörper 18‴ umfasst, der aus Aluminium gefertigt ist.

Der Dichtkörper 18‴ weist eine Durchgangsöffnung 18' auf, die im Ausgangszustand des Kartuschensystems 1 wiederum durch eine Dichtfolie 18" verschlossen ist (siehe Figur 3a). Die Durchgangsöffnung 18' ist derart angeordnet, dass der Aufstechdorn 73, wenn er von der eingefahrenen Position in die ausgefahrene Position überführt wird, durch die Durchgangsöffnung 18' ragt und dabei die Dichtfolie 18" durchsticht (siehe Figur 3b). Insbesondere gelangt der Aufstechdorn 73 dabei nicht in Kontakt mit dem Dichtkörper 18‴. Der Dichtkörper 18‴ kann daher sehr stabil ausgebildet sein.

Die Dichtfolie 18' umfasst wiederum eine Kunststofffolie, eine Aluminiumfolie oder eine Mehrschichtfolie aus Kunststoff und/oder Aluminium, dessen umlaufender Rand vorzugsweise am Dichtkörper 18‴ festgeklebt, festgesiegelt und/oder festgeschweißt ist. Die Dichtfolie 18' ist insbesondere an der Außenseite des Dichtkörpers 18‴, also an der der Mischkammer 8 zugewandten Seite, am Dichtkörper 18‴ angeordnet und/oder befestigt.

Der Dichtkörper 18‴ ist mit seinem Randbereich vorzugsweise an den Rand 2ʺʺ der Kartuschenwandung 2" gecrimpt, um den Dichtkörper 18‴ an dem Hauptkörper 2′ zu befestigen. Denkbar ist, dass die Kartuschenwandung 2" am Rand 2ʺʺ als Verbindungsmittel 20 einen umlaufenden Steg aufweist, um welchen der Dichtkörper 18‴ gecrimpt ist. Der Dichtkörper 18‴ stellt somit eine Art Crimpkappe dar.

Alternativ wäre denkbar, dass der Dichtkörper 18‴ mit der Kartuschenwandung 2" verschraubt ist, also ein Innengewinde des Dichtkörpers 18‴ in ein Außengewinde an der Kartuschenwandung 2" eingreift. Die Verschraubung ist dabei vorzugsweise derart ausgelegt, dass lediglich ein Aufschrauben mit anschließendem Verrasten ermöglicht wird, so dass durch die Verrastung ein späteres Losschrauben verhindert wird.

Alternativ ist denkbar, dass am Rand der Kartuschenwandung 2" ein insbesondere umlaufende Verbindungsmittel 20, insbesondere eine Rastsicke, ein Rastwulst oder einen Hinterschnitt, zur Verbindung der Kartusche 2 mit dem Dichtkörper 18‴ aufweist. Vorzugsweise weist der Dichtkörper 18‴ ein zum Verbindungsmittel 20 komplementäres Gegenverbindungsmittel 21, insbesondere eine weitere Rastsicke, ein Rastwulst oder ein Hinterschnitt, auf, welches form-, kraft- und/oder stoffschlüssig mit dem Verbindungsmittel 20 verbunden ist.

Der Dichtkörper 18‴ weist in seinem typischen Wandungsbereich vorzugsweise eine Wandstärke zwischen 0,09 und 0,5 Millimeter, bevorzugt zwischen 0,1 und 0,3 Millimeter, besonders bevorzugt zwischen 0,15 und 0,25 Millimeter und ganz besonders bevorzugt von im Wesentlichen 0,2 Millimeter, insbesondere mit einer Fehlertoleranz von maximal 15%, auf.

In **Figur 4** ist eine schematische Schnittbildansicht eines weiteren Kartuschensystems. Die vierte Ausführungsform gleicht der anhand von Figuren 1a, 1b und 1c illustrierten und erläuterten ersten Ausführungsform, wobei im Unterschied zur dritten Ausführungsform die Dichtfolie 18" nicht auf der Außenseite des Dichtkörpers 18‴ angeordnet ist, sondern wobei die Dichtfolie 18" auf der dem Reservoir 6 zugewandten Innenseite des Dichtkörpers 18‴ angeordnet und insbesondere befestigt ist.

Die Dichtfolie 18' umfasst wiederum eine Kunststofffolie, eine Aluminiumfolie oder eine Mehrschichtfolie aus Kunststoff und/oder Aluminium, dessen umlaufender Rand vorzugsweise an der Innenseite des Dichtkörpers 18‴ festgeklebt, festgesiegelt und/oder festgeschweißt ist.

In Figur 5 ist eine schematische Schnittbildansicht eines weiteren Kartuschensystems. Die fünfte Ausführungsform gleicht der anhand von Figuren 3a und 3b illustrierten und erläuterten dritten Ausführungsform, wobei im Unterschied zur dritten Ausführungsform der Dichtkörper 18‴ einen Befestigungsbereich an seinem Rand aufweist.

Dieser Befestigungsbereich ist gegenüber dem übrigen Bereich des Dichtkörpers 18‴ um 90 Grad angewinkelt und erstreckt sich somit parallel zur Kartuschenwandung 2". Es existiert daher ein Überlappungsbereich zwischen dem Befestigungsbereich und dem Rand 2ʺʺ der Kartuschenwandung 2". Der Dichtkörper 18‴ ist somit ebenfalls napfförmig ausgebildet. Im vorliegenden Beispiel hat der Befestigungsbereich eine etwas größeren Radius als der Rand 2ʺʺ der Kartuschenwandung 2", so dass der Befestigungsbereich zumindest teilweise zwischen dem Rand 2ʺʺ der Kartuschenwandung 2" und dem Rand der Kartuschenaufnahme 10 angeordnet ist.

Der Befestigungsbereich ist insbesondere zwischen dem Verbindungsmittel 20 und dem Gegenverbindungsmittel 21 angeordnet und dort zusätzlich befestigt, insbesondere durch Verkleben, Einklemmen, Verpressen, Verschweißen oder dergleichen.

Der Dichtkörper 18ʺʺ wird insbesondere durch Tiefziehen oder Fließpressen aus dem Aluminiumblech in seine napfförmige Ausgestaltung gebracht.

Denkbar ist, dass die Kartuschenwandung 2" und die Kartuschenaufnahme 10 zusätzlich auch die Verbindungs- und Gegenverbindungsmittel 20, 21 aufweist. Alternativ sind diese Verbindungs- und Gegenverbindungsmittel 20, 21 nicht realisiert.

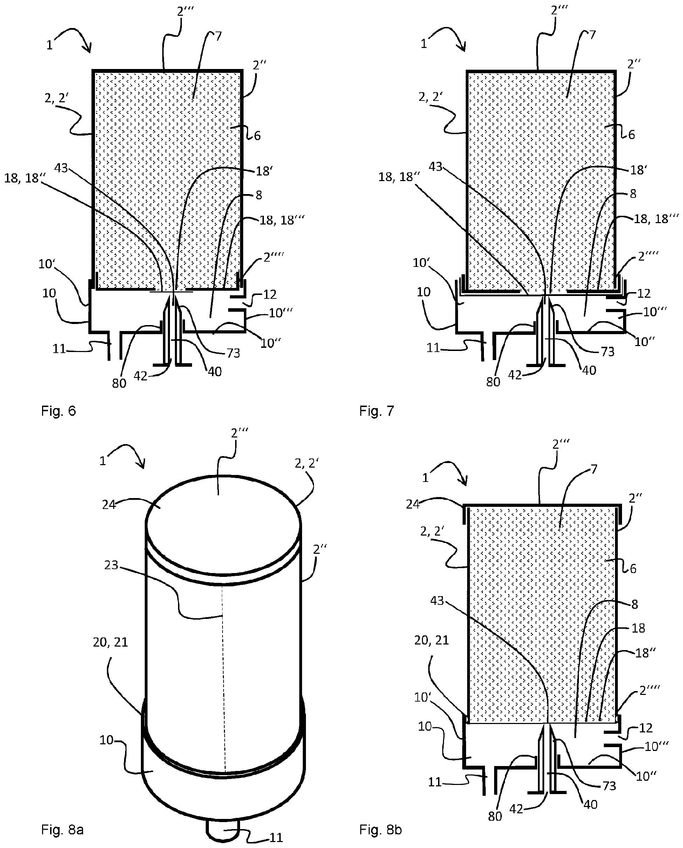

In **Figur 6** ist eine schematische Schnittbildansicht eines weiteren Kartuschensystems. Die sechste Ausführungsform gleicht der anhand von Figur 5 illustrierten und erläuterten vierten Ausführungsform, wobei im Unterschied zur vierten Ausführungsform der Dichtkörper 18‴ einen kleineren Radius als die Kartuschenwandung 2" aufweist.

Der Befestigungsbereich ist somit auf der Innenseite der Kartuschenwandung 2" angeordnet, so dass der Rand 2ʺʺ der Kartuschenwandung 2" zwischen dem Befestigungsbereich und dem Rand der Kartuschenaufnahme 10 angeordnet und dort befestigt, insbesondere durch Verkleben, Einklemmen, Verpressen, Verschweißen oder dergleichen, ist.

Denkbar ist, dass die Kartuschenwandung 2" und die Kartuschenaufnahme 10 zusätzlich auch die Verbindungs- und Gegenverbindungsmittel 20, 21 aufweist. Alternativ sind diese Verbindungs- und Gegenverbindungsmittel 20, 21 nicht realisiert.

In **Figur 7** ist eine schematische Schnittbildansicht eines weiteren Kartuschensystems. Die sechste Ausführungsform gleicht der anhand von Figur 5 illustrierten und erläuterten vierten Ausführungsform, wobei sich im Unterschied zur vierten Ausführungsform die Dichtfolie 18" bis zum Befestigungsbereich erstreckt.

In **Figuren 8a und 8b** sind eine Perspektivansicht und eine schematische Schnittbildansicht eines weiteren Kartuschensystems.

Die achte Ausführungsform gleicht der anhand von Figuren 1a, 1b und 1c illustrierten und erläuterten ersten Ausführungsform, wobei im Unterschied der Hauptkörper 2' nicht im Tiefziehverfahren hergestellt ist.

Der Hauptkörper 2' besteht daher auch nicht aus einer Kartuschenwandung 2" und einem Kartuschenboden 2‴, die einstückig miteinander verbunden sind. Bei der achten Ausführungsform wird der Hauptkörper 2' dadurch gebildet, dass ein Aluminiumblech zu einem zylinderförmigen Rohr gebogen wird. Die Stoßseiten des zu dem Rohr gebogenen Blechs werden sodann miteinander verklebt, verschweißt oder verpresst, wodurch eine Längsnaht 23 entsteht.

Zusätzlich wird der Kartuschenboden 2‴ als separater Deckelkörper 24 ausgeformt, insbesondere durch Tiefziehen oder Fließpressen eines weiteren Aluminiumblechs. Dieser als separater Deckelkörper 24 ausgebildeter Kartuschenboden 2‴ wird anschließend über dasjenige Ende der zum Rohr gebogenen Kartuschenwandung 2" gestülpt, welches der Kartuschenaufnahme 10 abgewandt ist und dort mit der Kartuschenwandung 2" umlaufend verklebt, verschweißt und/oder verpresst. Insbesondere wird der Deckelkörper 24 zur Bildung des Kartuschenbodens 2‴ auf die rohrförmige Kartuschenwandung 2" aufgecrimpt.

Die nachfolgenden Herstellungsschritte können je nach Ausführungsform des Dichtelements, wahlweise wie bei einem der vorstehend beschriebenen anderen Ausführungsformen (erste bis siebte Ausführungsform) durchgeführt werden.

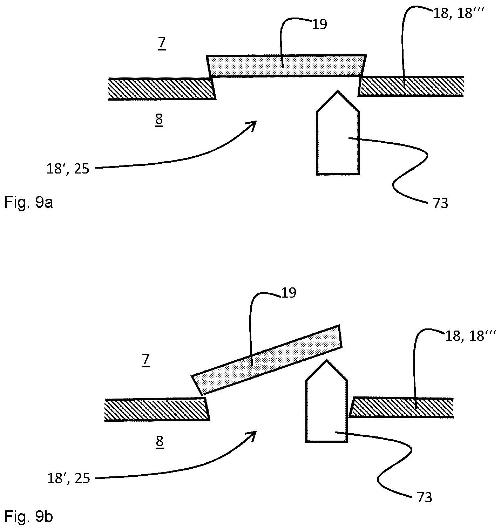

In **Figuren 9a und 9b** sind jeweils eine schematische Schnittbild- und Detailansicht des Dichtelements 18 des weiteren Kartuschensystems.

Die neunte Ausführungsform gleicht der anhand von Figuren 3a und 3b illustrierten und erläuterten dritten Ausführungsform, wobei im Unterschied das Dichtelement 18 keine Dichtfolie 18" umfasst, sondern lediglich aus dem Dichtkörper 18‴ besteht. Der Dichtkörper 18‴ ist wiederum starr oder halbstarr ausgebildet und ist aus Aluminium gefertigt.

Der Dichtkörper 18‴ weist eine Vorstanzung 27 auf, bei welcher ein Teilbereich 19 des Dichtkörpers 18‴ teilweise aus dem Dichtkörper 18‴ vorausgestanzt ist. Dieser Teilbereich 19 wird durch die Vorstanzung 25 allerdings nicht vollständig ausgestanzt, sondern nur teilweise ausgestanzt, so dass er in seinen Eckbereichen noch einstückig mit dem übrigen Dichtkörper 18‴ verbunden bleibt und das Reservoir 7 gegenüber der Mischkammer 8 abdichtet. Dieser Ausgangszustand (auch als Auslieferungszustand der Kartusche zu bezeichnen) ist in Figur 9a illustriert.

Durch die Vorstanzung 25 des Dichtelements 18 bzw. Dichtkörpers 18‴ weist der Dichtkörper 18‴ im Randberiech des Teilbereichs 19 eine Schwächung bzw. Sollbruchstelle auf. Wenn nun vor oder während des Getränkeherstellung der Aufstechdorn 73 auf den Teilbereich 19 trifft und diesen in Richtung Reservoir 7 drückt, reißt die Verbindung zwischen dem Teilbereich 19 und dem übrigen Dichtkörper 19 zumindest teilweise ab bzw. ein, wodurch sich die Durchgangsöffnung 18' ausbildet, insbesondere gemäß der Größe der Vorausstanzung 25.

Dadurch, dass der Teilbereich 19 aus dem Dichtkörper 18‴ ausgestanzt ist, weist er im Wesentlichen die identische Größe bzw. den identischen Durchmesser wie die Durchgangsöffnung 18' auf, in welcher während der Getränkeherstellung noch dazu der Aufstechdorn 73 angeordnet ist. Hierdurch wird vorteilhafterweise verhindert, dass der abgelöste Teilbereich 19 durch die Durchgangsöffnung 18' in die Mischkammer 8 gelangt.

### Bezugszeichenliste

- 1: Kartuschensystem
- 2: Kartusche
- 2': Hauptkörper
- 2": Kartuschenwandung
- 2‴: Kartuschenboden
- 2ʺʺ: Rand der Kartuschenwandung
- 6: Reservoir
- 7: Getränkesubstanz
- 8: Mischkammer
- 10: Kartuschenaufnahme
- 10': Grundstruktur
- 10": Bodenseite
- 10‴: Seitenwandung der Grundstruktur
- 11: Getränkeauslauf
- 12: Fluidzuführung
- 18: Dichtelement
- 18': Durchgangsöffnung
- 18": Dichtfolie
- 18‴: Dichtkörper
- 19: Teilbereich
- 20: Verbindungsmittel
- 21: Gegenverbindungsmittel
- 22: Stützstruktur
- 23: Längsnaht
- 24: Deckelkörper
- 25: Vorstanzung
- 40: Druckluftleitung
- 42: Druckluftanschluss
- 43: Druckluftauslass
- 71: Seitenkanal
- 70: Getränk
- 73: Aufstechdorn
- 80: Dornführung

## Patentansprüche

1. Verfahren zur Herstellung eines Kartuschensystems (1) zur Herstellung eines Getränks (70), wobei das Kartuschensystem (1) in eine Getränkezubereitungsmaschine (3) einsetzbar ist, eine Kartusche (2), die ein mit einer Getränkesubstanz (7) gefülltes Reservoir (6) umfasst, und eine mit der Kartusche (2) verbundene Kartuschenaufnahme (10) aufweist, wobei die Kartuschenaufnahme (10) eine mit dem Reservoir (6) in Fluidverbindung bringbare Mischkammer (8) und eine in die Mischkammer (8) mündende Fluidzuführung (12) aufweist, wobei die Kartusche (2) zumindest teilweise aus Aluminium gefertigt ist, **dadurch gekennzeichnet, dass** in einem ersten Verfahrensschritt ein Aluminiumblech bereitgestellt wird, wobei in einem zweiten Verfahrensschritt durch Stanzen und Tiefziehen oder Fließpressen der Hauptkörper (2') zumindest teilweise aus dem Aluminiumblech erzeugt wird, wobei in einem dritten Verfahrensschritt ein Dichtelement (18) am Hauptkörper (2') befestigt wird und wobei in einem vierten Verfahrensschritt der Hauptkörper (2') mit der Kartuschenaufnahme (10) verbunden wird.

2. Verfahren nach Anspruch 1, wobei in einem vor dem vierten Verfahrensschritt durchgeführten Zwischenschritt die Kartuschenaufnahme (10) durch Spritzgie-ßen von Kunststoff hergestellt wird.

3. Verfahren nach einem der Ansprüche 1 oder 2, wobei in einem vor oder nach dem vierten Verfahrensschritt durchgeführten weiteren Zwischenschritt ein Aufstechdorn (73) hergestellt und in eine Dornführung (80) der Kartuschenaufnahme (10) eingebracht wird.

4. Verfahren nach einem der Ansprüche 1 bis 3, wobei in einem vor dem dritten Verfahrensschritt durchgeführten weiteren Zwischenschritt das Dichtelement (18) in Form eines Dichtkörpers (18‴) aus einem Aluminiumblech und/oder aus einer Dichtfolie (18"), vorzugsweise einer Kunststofffolie, einer Aluminiumfolie oder einer Mehrschichtfolie aus Kunststoff und/oder Aluminium, ausgestanzt und/oder ausgeschnitten wird.

5. Verfahren nach Anspruch 4, wobei im weiteren Zwischenschritt der Teilbereich (10) im Dichtkörper (18) zur Ausbildung der Vorstanzung (25) teilweise gestanzt wird.

6. Verfahren nach einem der Ansprüche 1 bis 5, wobei in einem vor oder während des dritten Verfahrensschrittes durchgeführten weiteren Zwischenschritt das Dichtelement (18) um einen Rand (2ʺʺ) der Kartuschenwandung (2") geformt wird.

7. Verfahren nach einem der Ansprüche 1 bis 6, wobei während des dritten Verfahrensschrittes das Dichtelement (18) an den Rand (2ʺʺ) der Kartuschenwandung (2") gecrimpt, geklebt, gesiegelt und/oder geschweißt wird.

8. Verfahren nach einem der Ansprüche 1 bis 7, wobei während des vierten Verfahrensschrittes ein Befestigungsbereich des Dichtelements (18) zwischen dem Rand (2ʺʺ) der Kartuschenwandung (2") und einem Teil der Kartuschenaufnahme (10) angeordnet und insbesondere eingeklemmt, eingeschweißt und/oder eingeklebt wird.

9. Verfahren nach einem der Ansprüche 1 bis 8, wobei in einem weiteren Zwischenschritt eine Durchgangsöffnung (18') in dem Dichtelement (18) erzeugt, insbesondere in das Dichtelement (18') gebohrt wird und wobei die Durchgangsöffnung (18') in einem späteren weiteren Zwischenschritt mit einer Dichtfolie (18") verschlossen wird, wobei die Dichtfolie (18") vorzugsweise auf das Dichtelement (18) geklebt, geschweißt und/oder gesiegelt wird.

10. Verfahren nach einem der Ansprüche 1 bis 9, wobei während oder nach dem zweiten Verfahrensschritt durchgeführten weiteren Zwischenschritt ein Verbindungsmittel (20), insbesondere eine Rastsicke, ein Rastwulst oder ein Hinterschnitt, in der Kartuschenwandung (2") insbesondere durch Umformen erzeugt wird.

11. Verfahren nach einem der Ansprüche 1 bis 10, wobei vor dem vierten Verfahrensschritt und insbesondere während des Spritzgießens des Kartuschenaufnahme (10) ein Gegenverbindungsmittel (21), (20), insbesondere eine Rastsicke, ein Rastwulst oder ein Hinterschnitt, an der Kartuschenaufnahme (10) erzeugt wird.

12. Verfahren nach einem der Ansprüche 1 bis 11, wobei während des vierten Verfahrensschrittes ein Befestigungsbereich des Dichtelements (18) zwischen dem Verbindungsmittel (20) und dem Gegenverbindungsmittel (21) angeordnet und insbesondere eingeklemmt, eingeschweißt und/oder eingeklebt ist wird.

## Claims

1. Method for producing a cartridge system (1) for producing a beverage (70), wherein the cartridge system (1) is insertable into a beverage preparation machine (3), has a cartridge (2) comprising a reservoir (6) filled with a beverage substance (7), and a cartridge receptacle (10) connected to the cartridge (2); wherein the cartridge receptacle (10) has a mixing chamber (8) which can be fluidically connected to the reservoir (6), and a fluid supply (12) which opens into the mixing chamber (8), wherein the cartridge (2) is at least partially made of aluminium, **characterized in that**, in a first method step, an aluminium sheet is provided, wherein, in a second method step, the main body (2') is at least partially produced from the aluminium sheet by punching and deep drawing or extrusion, wherein, in a third method step, a sealing element (18) is attached to the main body (2') and wherein, in a fourth method step, the main body (2') is connected to the cartridge receptacle (10).

2. Method according to Claim 1, wherein, in an intermediate step carried out before the fourth method step, the cartridge receptacle (10) is produced by injection-moulding a plastics material.

3. Method according to one of Claims 1 or 2, wherein, in a further intermediate step carried out before or after the fourth method step, a piercing mandrel (73) is produced and introduced into a mandrel guide (80) of the cartridge receptacle (10).

4. Method according to one of Claims 1 to 3, wherein, in a further intermediate step carried out before the third method step, the sealing element (18) in the form of a sealing body (18‴) is punched and/or cut out of an aluminium sheet and/or from a sealing film (18"), preferably a plastics-material film, an aluminium foil or a multilayer film of plastics material and/or aluminium.

5. Method according to Claim 4, wherein, in the further intermediate step, the sub-region (10) in the sealing body (18) for forming the preliminary punching (25) is partially punched.

6. Method according to one of Claims 1 to 5, wherein, in a further intermediate step carried out before or during the third method step, the sealing element (18) is formed about a periphery (2"") of the cartridge wall (2").

7. Method according to one of Claims 1 to 6, wherein, during the third method step, the sealing element (18) is crimped, adhesively bonded, sealed and/or welded to the periphery (2"") of the cartridge wall (2").

8. Method according to one of Claims 1 to 7, wherein, during the fourth method step, a fastening region of the sealing element (18) is disposed, in particular clamped, welded and/or adhesively bonded, between the periphery (2ʺʺ) of the cartridge wall (2") and part of the cartridge receptacle (10).

9. Method according to one of Claims 1 to 8, wherein, in a further intermediate step, a passage opening (18') is generated in the sealing element (18), in particular drilled in the sealing element (18'), and wherein, in a later further intermediate step, the passage opening (18') is closed with a sealing film (18"), wherein the sealing film (18") is preferably adhesively bonded, welded and/or sealed to the sealing element (18).

10. Method according to one of Claims 1 to 9, wherein, in the further intermediate step carried out during or after the second method step, a connecting means (20), in particular a latching seam, a latching bead or an undercut, is produced in the cartridge wall (2"), in particular by forming.

11. Method according to one of Claims 1 to 10, wherein, before the fourth method step, and in particular during the injection-moulding of the cartridge receptacle (10), a mating connecting means (21), (20), in particular a latching seam, a latching bead or an undercut, is generated on the cartridge receptacle (10).

12. Method according to one of Claims 1 to 11, wherein, during the fourth method step, a fastening region of the sealing element (18) is disposed, in particular clamped, welded and/or adhesively bonded, between the connecting means (20) and the mating connecting means (21).

## Revendications

1. Procédé de fabrication d'un système de cartouche (1) pour la fabrication d'une boisson (70), le système de cartouche (1) pouvant être inséré dans une machine de préparation de boissons (3), une cartouche (2) qui comprend un réservoir (6) rempli d'une substance de boisson (7), et un logement de cartouche (10) relié à la cartouche (2), le logement de cartouche (10) présentant une chambre de mélange (8) pouvant être mise en communication fluidique avec le réservoir (6) et une amenée de fluide (12) débouchant dans la chambre de mélange (8), la cartouche (2) étant fabriquée au moins partiellement en aluminium, **caractérisé en ce que** dans une première étape de procédé, une tôle d'aluminium est préparée, dans une deuxième étape de procédé, le corps principal (2') étant produit au moins partiellement à partir de la tôle d'aluminium par estampage et emboutissage ou extrusion, dans une troisième étape de procédé, un élément d'étanchéité (18) étant fixé au corps principal (2') et dans une quatrième étape de procédé, le corps principal (2') étant relié au logement de cartouche (10).

2. Procédé selon la revendication 1, dans lequel, dans une étape intermédiaire réalisée avant la quatrième étape de procédé, le logement de cartouche (10) est fabriqué par moulage par injection de matière plastique.

3. Procédé selon l'une quelconque des revendications 1 ou 2, dans lequel, au cours d'une autre étape intermédiaire réalisée avant ou après la quatrième étape de procédé, un mandrin de perçage (73) est fabriqué et inséré dans un guide de mandrin (80) du logement de cartouche (10).

4. Procédé selon l'une quelconque des revendications 1 à 3, dans lequel, dans une autre étape intermédiaire réalisée avant la troisième étape de procédé, l'élément d'étanchéité (18) est découpé à l'emporte-pièce et/ou découpé sous la forme d'un corps d'étanchéité (18''') dans une tôle d'aluminium et/ou dans une feuille d'étanchéité (18"), de préférence une feuille de matière plastique, une feuille d'aluminium ou une feuille multicouche de matière plastique et/ou d'aluminium.

5. Procédé selon la revendication 4, dans lequel, dans une autre étape intermédiaire, la zone partielle (10) est partiellement découpée à l'emporte-pièce dans le corps d'étanchéité (18) pour former la pré-découpe (25).

6. Procédé selon l'une quelconque des revendications 1 à 5, dans lequel, dans une autre étape intermédiaire réalisée avant ou pendant la troisième étape de procédé, l'élément d'étanchéité (18) est façonné autour d'un bord (2ʺʺ) de la paroi de la cartouche (2'').

7. Procédé selon l'une quelconque des revendications 1 à 6, dans lequel, pendant la troisième étape de procédé, l'élément d'étanchéité (18) est serti, collé, scellé et/ou soudé sur le bord (2ʺʺ) de la paroi de la cartouche (2").

8. Procédé selon l'une quelconque des revendications 1 à 7, dans lequel, pendant la quatrième étape de procédé, une zone de fixation de l'élément d'étanchéité (18) est agencée entre le bord (2ʺʺ) de la paroi de la cartouche (2'') et une partie du logement de cartouche (10) et est notamment serrée, soudée et/ou collée.

9. Procédé selon l'une quelconque des revendications 1 à 8, dans lequel, dans une autre étape intermédiaire, une ouverture de passage (18') est produite dans l'élément d'étanchéité (18), notamment est percée dans l'élément d'étanchéité (18'), et dans lequel l'ouverture de passage (18') est fermée par une feuille d'étanchéité (18") dans une autre étape intermédiaire ultérieure, la feuille d'étanchéité (18") étant de préférence collée, soudée et/ou scellée sur l'élément d'étanchéité (18).

10. Procédé selon l'une quelconque des revendications 1 à 9, dans lequel, dans une autre étape intermédiaire réalisée pendant ou après la deuxième étape de procédé, un moyen de liaison (20), notamment une moulure d'encliquetage, un bourrelet d'encliquetage ou une contre-dépouille, est produit dans la paroi de la cartouche (2"), notamment par mise en forme.

11. Procédé selon l'une quelconque des revendications 1 à 10, dans lequel, avant la quatrième étape de procédé et notamment pendant le moulage par injection du logement de cartouche (10), un moyen de liaison complémentaire (21), (20), notamment une moulure d'encliquetage, un bourrelet d'encliquetage ou une contre-dépouille, est produit sur le logement de cartouche (10).

12. Procédé selon l'une quelconque des revendications 1 à 11, dans lequel, pendant la quatrième étape de procédé, une zone de fixation de l'élément d'étanchéité (18) est agencée entre le moyen de liaison (20) et le moyen de liaison complémentaire (21) et est notamment serrée, soudée et/ou collée.
